# EUROPEAN PATENT APPLICATION

(11) **EP 4 455 072 A1**
(43) Date of publication of application: **30.10.2024**
(21) Application number: 24172569.6
(22) Date of filing: 25.04.2024
(51) Int. Cl.: B66C 1/10, B64D 1/22, B66C 13/08

(54) **LIFTING TOOL, LIFTING AND LOADING DEVICE USING THE SAME, SYSTEM AND METHOD FOR ADJUSTING ATTITUDE OF THE LIFTING TOOL**

(30) Priority: 28.04.2023 CN 202310487795
(71) Applicant: Angavia Tech (Beijing) Co., Ltd., Beijing 100080 (CN)
(72) Inventor: ZHANG, Yao, Beijing, 100080 (CN); MA, Yiran, Beijing, 100080 (CN)
(74) Representative: Patentwerk B.V.

(57) **Abstract**

A lifting tool (10) is provided comprising a load-bearing device (100) and fluid power devices (200) installed on the load-bearing device (100). The load-bearing device (100) is suspended on a lifting and loading device by ropes, and the fluid power devices (200) are installed on at least the same one installation surface of the load-bearing device (100).

## Description

### FIELD OF THE INVENTION

The present disclosure relates to the field of lifting equipment, and in particular to a lifting tool, a lifting and loading device using the lifting tool, and a system and method for adjusting the attitude of the lifting tool.

### BACKGROUND OF THE INVENTION

The description of background provided herein is used to provide an overall introduction to the background of the present application. Work of the currently named inventors, to the extent it is described in this section, and all aspects in the description that do not constitute the prior art at the time of filing the present application are neither explicitly nor implicitly acknowledged as the prior art against the present application.

Lifting equipment has a wide range of applications in construction engineering, production and manufacturing, and cargo transportation, etc. Usually, wind is a common adverse factor that affects normal operation of lifting equipment. During the operation, the lifted object suspended in the air may sway, rotate or the like when subjected to wind, which not only affects lifting the suspended object to the accurate position, but also poses safety hazards to the operation process. Therefore, in order to ensure safety of operation, the lifting operation is usually prohibited in windy weather, which will undoubtedly affect the progress/ schedule of operation. On the other hand, in the prior art, during the process of lifting the lifted object to a target position, the lifted object can approach the target position only by moving the position of a lifting arm or lifting beam. However, the lifting arm and the lifting beam often deviate from the target position due to their large movement amplitude, which brings inconvenience to the operation process.

Therefore, there is still a need for improvement in the wind resistance and position micro-adjustment function of the lifting tools in the prior art.

### SUMMARY OF THE INVENTION

This section introduces the selection of inventive concepts in a simplified form, and these concepts will be further reflected in the following detailed description. This section is not intended to identify the key or essential features of the claimed subjects, nor is it intended to be used as assistance in determining the scope of the claimed subjects.

In view of the existing problems in the prior art, in one aspect, the present application provides a lifting tool, which includes a load-bearing device and fluid power devices installed on the load-bearing device, in which the load-bearing device is suspended on a lifting and loading device by ropes, and the fluid power devices are installed on at least the same one installation surface of the load-bearing device.

Preferably, the load-bearing device also includes a power supply to provide electric power to the fluid power devices.

Preferably, the number of the fluid power devices is at least two, and the fluid power devices are distributed at intervals along a circumference centered on a geometric center of the installation surface.

Preferably, the number of the fluid power devices is at least three, and the fluid power devices can provide forces in a diameter direction of the circumference.

Preferably, the number of the fluid power devices is four, and the fluid power devices can provide forces along a tangential direction of the circumference, in which the number of the fluid power devices that provide forces in a clockwise direction along the tangential direction and the number of the fluid power devices that provide forces in a counterclockwise direction along the tangential direction are both two, and these fluid power devices are alternately distributed.

Preferably, the fluid power devices are arranged in such a way that geometric centers thereof form vertices of a rectangle.

Preferably, the lifting tool further includes four additional fluid power devices, which are correspondingly installed on the fluid power devices, and the forces provided by the additional fluid power devices during operation are in an opposite direction to the forces provided by the fluid power devices on which the additional fluid power devices are installed during operation.

Preferably, a steerable rudder or air guide pipe is installed at a tail portion of the fluid power device.

Preferably, the lifting tool also includes driving devices, the number of which is the same as the number of the fluid power devices.

Preferably, the driving device includes a driving motor and a transmission mechanism, and the transmission mechanism is a connecting rod or a gear.

Preferably, the load-bearing device has two installation surfaces, and the fluid power devices are installed to the two installation surfaces and located between the two installation surfaces.

Preferably, a winch unit is also installed on the installation surface; the winch unit includes a winch body, a rope, a driving device, a transmission mechanism, and a rope guide mechanism, one end of the rope being wound around the winch body and the other end of the rope being connected to the lifting and loading device.

Preferably, the rope is conductive for charging the power supply.

Preferably, there are multiple winch units, and the winch bodies of the winch units are distributed at intervals along the circumference centered on the geometric center of the installation surface.

Preferably, the number of the winch units is four, and the winch bodies of the winch units are arranged in such a way that geometric centers thereof form vertices of a rectangle.

Preferably, the fluid power device is a propeller, a duct, a gas injection device, or a liquid injection device.

Preferably, the fluid power device is a gas injection device, and a gas storage device is also installed on the installation surface to provide gas for the gas injection device.

Preferably, a throttle valve is installed on each gas injection device.

Preferably, the number of the gas injection devices is at least four.

Preferably, the number of the gas injection devices is eight, in which every two gas injection devices are integrated and installed together, and injection directions of the two gas injection devices are perpendicular to each other.

Preferably, the number of the gas injection devices is twelve, in which every three gas injection devices are integrated and installed together, injection directions of two of the three gas injection devices are perpendicular to each other, and an injection direction of another one of the three gas injection devices forms an included angle of 45° with the injection directions of said other two gas injection devices.

In another aspect, the present application provides a lifting tool, which includes a load-bearing device and fluid power devices installed on the load-bearing device, in which the load-bearing device is suspended on a lifting and loading device by ropes, wherein the load-bearing device is a rectangular box, and at least one fluid power device is installed on each side in a height direction of the rectangular box.

In further another aspect, the present application provides a lifting and loading device using the lifting tool.

Preferably, three fluid power devices are installed on each side in the height direction of the rectangular box.

Preferably, the rectangular box is provided with an opening on a top surface or side surface, or with a door that can be opened and closed on a bottom surface.

Preferably, the fluid power device is a propeller, a duct, a gas injection device, or a liquid injection device.

In still further another aspect, the present application provides a system for adjusting the position of the lifting tool, in which the system includes a detection unit and a control unit; the detection unit is capable of detecting deviation information of deviation of the load-bearing device from a target position, and the control unit is capable of receiving the deviation information and controlling on/off of the fluid power device and/or adjusting a magnitude of the force provided by the fluid power device based on the deviation information.

Preferably, the controller commands an electronic speed controller or electric flow regulation valve to turn on or off the fluid power device and/or adjust the magnitude of the force provided by the fluid power device based on the received deviation information, and the electronic speed controller or the electric flow regulation valve controls on/off of the fluid power device and/or adjust the magnitude of the force provided by the fluid power device based on the command.

Preferably, the detection unit includes a locator, and a receiver installed on the load-bearing device.

In yet another aspect, the present application provides a method for adjusting the position of the lifting tool, and the method includes: detecting information of deviation of the position of the lifting tool from an expected position; analyzing the position deviation information of the lifting tool; and providing a corresponding force to the lifting tool through the fluid power device based on the analysis, enabling the lifting tool to arrive at the expected position.

Preferably, the position deviation information of the lifting tool is detected by a detection unit.

Preferably, the position deviation information of the lifting tool is received and analyzed by a controller.

Preferably, an electronic speed controller or electric flow regulation valve is used to control on/off of the fluid power device and/or adjust the magnitude of the force provided by the fluid power device.

### BRIEF DESCRIPTION OF THE DRAWINGS

In the following detailed description of embodiments, other or additional features, advantages and details will be presented by way of example only. In the drawings:
FIG. 1 shows a schematic structural view of the lifting tool according to the principle of the present application;
FIG. 2 shows a schematic view when two fluid power devices are installed on the installation surface of the load-bearing device;
FIG. 3 shows a schematic view when a rudder is installed on the installation surface of the load-bearing device;
FIG. 4 shows a schematic view of the layout of the fluid power devices on the installation surface of the load-bearing device;
FIG. 5 shows a schematic view when eight fluid power devices are installed on the installation surface of the load-bearing device;
FIG. 6 shows a schematic side view when the fluid power devices are installed on two installation surfaces of the load-bearing device;
FIG. 7 shows a schematic view when eight fluid injection devices are installed on the installation surface of the load-bearing device;
FIG. 8 shows a schematic view when twelve fluid injection devices are installed on the installation surface of the load-bearing device;
FIG. 9 shows a schematic view when winch units are installed on the installation surface of the load-bearing device;
FIG. 10 shows a schematic simplified layout view when four winch units are installed on the installation surface of the load-bearing device;
FIG. 11 shows a schematic structural view when the load-bearing device is a rectangular box;
FIG. 12 shows a schematic structural view when the load-bearing device is a rectangular box with an opening being provided on a side surface;
FIG. 13 shows a schematic structural view when the load-bearing device is a rectangular box with an opening and a door being provided on a bottom surface;
FIG. 14 shows a schematic structural view when charging the power supply on the load-bearing device using a rope;
FIG. 15 shows another schematic structural view when charging the power supply on the load-bearing device using a rope; and
FIG. 16 shows a schematic view of the system for adjusting the position of the lifting tool according to the principle of the present application.

### DETAILED DESCRIPTION OF THE EMBODIMENT(S) OF THE INVENTION

The following description is essentially illustrative and not intended to limit the present application, its application or use. Further, it is not intended to limit the present application by any explicit or implicit theory presented in the preceding sections of "FIELD OF THE INVENTION", "BACKGROUND OF THE INVENTION" and "SUMMARY OF THE INVENTION" or the following detailed description. It should be understood that throughout the drawings, corresponding reference signs denote similar or corresponding components or features.

The present application will now be further explained below. In the following paragraphs, different aspects of the present application are defined in greater detail. Unless explicitly indicated to the contrary, each of the such-defined aspects can be combined with any other (multiple) aspects. In particular, any feature indicated as being preferred or advantageous can be combined with any other (multiple) features indicated as being preferred or advantageous.

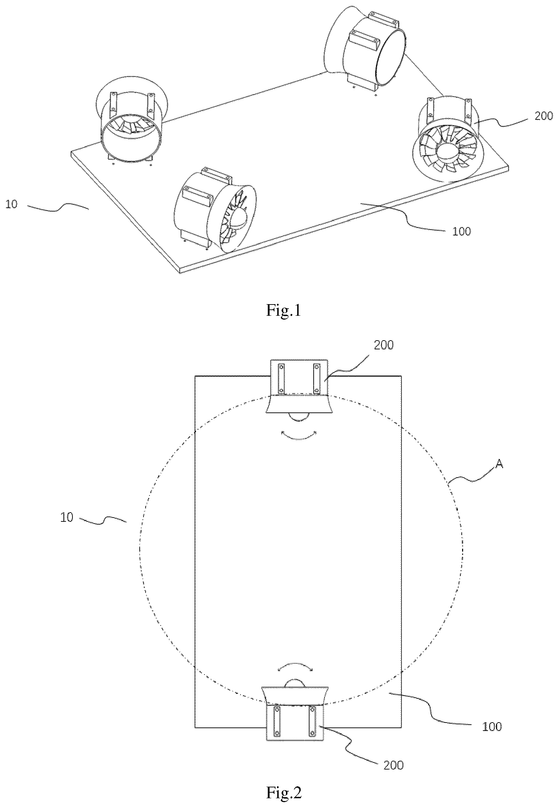

Referring to FIG. 1, a lifting tool 10 according to the principle of the present application is shown. The lifting tool 10 includes a load-bearing device 100 and fluid power devices 200 installed on the load-bearing device 100. FIG. 1 shows that the fluid power devices 200 are installed on the same installation surface of the load-bearing device 100, and the load-bearing device 100 can be suspended on a lifting and loading device (not shown) by ropes (not shown) such as steel wire ropes or copper wire ropes, and any other form of ropes such as nylon ropes. Advantageously, the lifting tool 10 may also include ropes connected to the load-bearing device 100, and the ropes may for example be metal ropes, such as steel wire ropes or copper wire ropes, and any other form of ropes such as nylon ropes. Therefore, during the lifting process, when the lifting tool 10 swings under the action of wind, the fluid power device 200 can provide the lifting tool 10 with a force that is generally opposite to the direction of wind and of a sufficient magnitude to counteract the influence of wind by stirring or injecting fluid, thus ensuring the basic stability of the lifting tool 10. Advantageously, a cut-out structure (not shown) can also be provided on the load-bearing device 100 to reduce the weight of the load-bearing device 100. Advantageously, a power supply (not shown) can be installed on the load-bearing device 100 to provide power to the fluid power devices 200 or other devices in need. Although there are four fluid power devices shown in FIG. 1, it can be understood by those skilled in the art that the number of the fluid power devices is not limited to this. The number of the fluid power devices 200 can be one or two. In this case, the fluid power devices 200 can be steerable, so that the steering of the fluid power devices 200 can be adjusted according to the direction of wind, thus providing forces opposite to the direction of wind to counteract the influence of wind. Optionally, in some application scenes where there is only constant unidirectional or bidirectional wind, the fluid power devices 200 may also be fixed, only providing forces opposite to the unidirectional or bidirectional wind. The number of the fluid power devices 200 can also be three or more. The load-bearing device 100 can be rectangular, circular, or of other suitable shapes; preferably, the load-bearing device 100 is rectangular.

Advantageously, the number of the fluid power devices 200 can be at least two, and the fluid power devices 200 are distributed at intervals along a circumference centered on a geometric center of the installation surface. Referring to FIG. 2, the number of the fluid power devices 200 can be two and they are steerable. A motor (not shown) can be installed on the load-bearing device 100 to drive the fluid power devices 200 to steer. Advantageously, the fluid power devices 200 can be installed at positions evenly dividing the circumference A centered on the geometric center of the installation surface, which is advantageous for uniform loads on the load-bearing device 100. Advantageously, the number of the fluid power devices 200 can be at least three; in this case, the fluid power devices 200 can be steerable, or they are fixedly installed. When the fluid power devices 200 are fixedly installed, they can provide forces in a diameter direction of the circumference A. It can be easily understood by those skilled in the art that when the fluid power devices 200 are operating, the forces they provide can pass through the geometric center of the installation surface, avoiding the generation of torque that can cause the load-bearing device 100 to rotate.

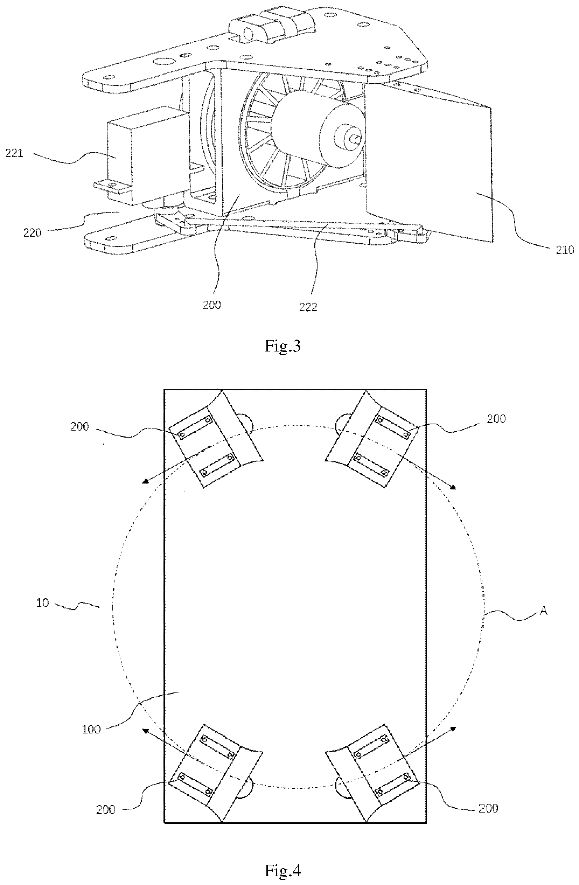

Advantageously, when there are at least three fluid power devices 200 and they are fixedly installed, a steering rudder 210 can further be installed at a tail portion of each fluid power device 200, as shown in FIG. 3. By steering, the rudder 210 can change the direction of the fluid stirred or injected by the fluid power device 200, thereby changing the direction of the force provided by the fluid power device 200. Advantageously, driving devices 220 can also be installed on the load-bearing device 100 with the number of the driving devices 220 being equal to the number of the fluid power devices 200, and the driving devices 220 provide steering power to the rudders 210 corresponding to the fluid power devices 200. The driving device 220 includes a motor 221 and a transmission mechanism 222; the motor 221 provides power to the rudder 210, and the transmission mechanism 222 transmits the power to the rudder 210, thereby driving the rudder 210 to steer. The transmission mechanism 222 can be a connecting rod or a gear. Alternatively, a steerable air guide pipe can also be installed at the tail portion of each fluid power device 200 to change the direction of the force provided by the fluid power device 200.

Referring to FIG. 4, the number of the fluid power devices 200 can be four, and the four fluid power devices 200 can provide forces along a tangential direction of the circumference A centered on the geometric center of the installation surface, in which the number of the fluid power devices 200 that provide forces in a clockwise direction along the tangent line and the number of the fluid power devices 200 that provide forces in a counterclockwise direction along the tangent line are both two, and these fluid power devices 200 are alternately distributed. Therefore, different magnitudes of forces in various directions can be provided by controlling on/off of each fluid power device 200 and the magnitude of force. Moreover, on one hand, when the fluid power device 200 provides the force along the tangential direction of the circumference A, it can avoid affecting other components arranged in the circumference A; for example, if the fluid power device 200 is a duct or a propeller, when it provides a force toward the circumference A through rotation, the generated airflow will affect other components arranged in the circumference A, such as causing disturbance to the rope; on the other hand, when the force of the fluid power device 200 is along the tangential direction, it is more advantageous for providing or composing the required force; for example, when the load-bearing device 100 is rectangular, the force bearing area on the long side is larger, and therefore a larger reaction force is required to counteract the influence of wind. Advantageously, the four fluid power devices 200 are distributed in such a way that their geometric centers form four vertices of a rectangle on the circumference A, which is advantageous for the uniform loads and beautiful layout of the load-bearing device 100.

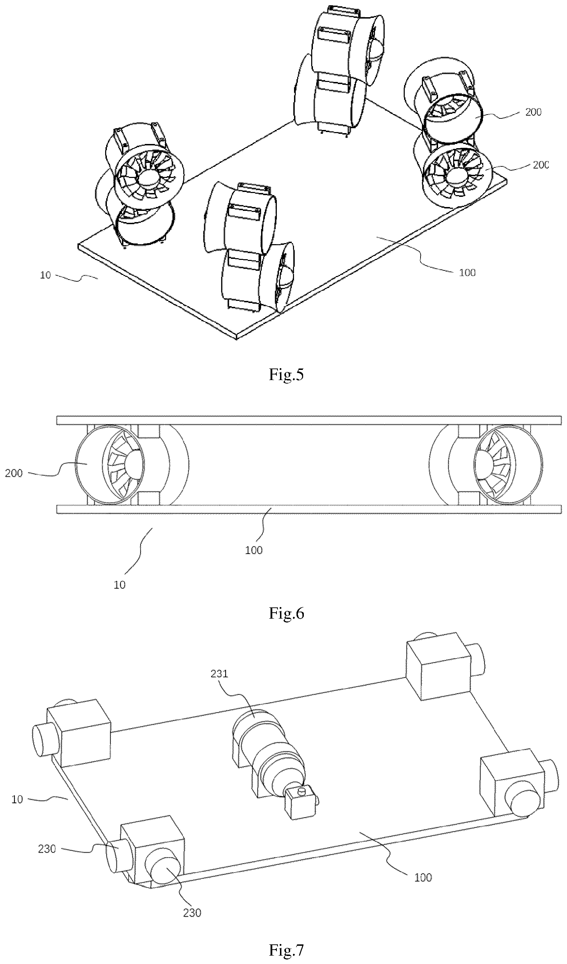

Referring to FIG. 5, alternatively, the number of the fluid power devices may be eight, and each of the eight fluid power devices can provide a force along a tangential direction of the circumference A centered on the geometric center of the installation surface, in which four fluid power devices 200 are installed on the installation surface of the load-bearing device, and the number of the fluid power devices 200 that provide forces in a clockwise direction along the tangent line of the circumference A and the number of the fluid power devices 200 that provide forces in a counterclockwise direction along the tangent line of the circumference A are both two, and these fluid power devices 200 are alternately distributed; the other four additional fluid power devices are correspondingly installed on the aforementioned four fluid power devices 200, and the force provided by each fluid power device 200 installed on the installation surface during operation is in an opposite direction to the force provided by the additional fluid power device 200 installed thereon. It can be easily understood by those skilled in the art that in this case, the increase in the number of the fluid power devices 200 and the different directions of the forces provided by each of them are advantageous for coordinated use between the fluid power devices 200 to provide forces in various directions.

In addition, referring to FIG. 6, the load-bearing device 100 can also have two installation surfaces, and the fluid power devices 200 are installed on these two installation surfaces and are located therebetween, so that the installation of each fluid power device 200 is more stable and a larger installation space can also be provided, which is advantageous for the layout of various components on the load-bearing device 100. In addition, the installation of the fluid power devices 200 and other components between the two installation surfaces can also provide support and reinforcement to the two installation surfaces, so there is no need to additionally provide a support structure between the two installation surfaces. Additionally, the components installed between the two installation surfaces can enhance the structural strength of the load-bearing device 100, which can also reduce the strength requirement for each installation surface to some extent. Therefore, cut-out structures can also be provided on the installation surfaces to reduce the weight of the load-bearing device 100.

It can be easily understood by those skilled in the art that the fluid power device 200 can be a device that provides a thrust by stirring or injecting fluid, such as a propeller, a duct, a gas injection device, or a liquid injection device. Preferably, the fluid power device 200 can be a duct.

Referring to FIG. 7, advantageously, the fluid power devices 200 can also be gas injection devices 230, and the number of the gas injection devices 230 can be at least four, so as to provide forces in multiple directions. A throttle valve (not shown) may be provided on the gas injection device 230 to regulate the flow rate. Advantageously, the number of the gas injection devices 230 is eight, in which every two gas injection devices are integrated and installed together, and injection directions of the two gas injection devices 230 integrated and installed together are perpendicular to each other. In the case of the installation surface being rectangular, two fluid injection devices can be installed at or near each corner of the rectangle, thereby providing forces in the directions parallel to each side of the rectangle. Gas storage devices 231 can be installed on the load-bearing device 100 to provide gas for each gas injection device 230. All the gas injection devices 230 can share one gas storage device 231, or separate gas storage devices 231 can be provided for each gas injection device 231. Alternatively, the gas injection devices 230 can be integrally installed with their corresponding gas storage devices 231.

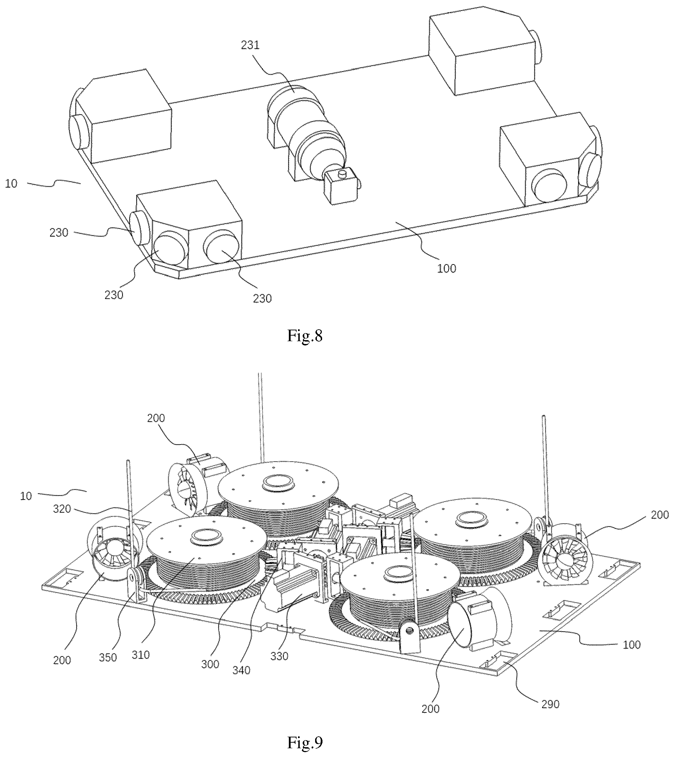

Referring to FIG. 8, the number of the gas injection devices 230 is twelve, in which every three gas injection devices 230 are integrated and installed together. In the case of theinstallation surface being rectangular, these three fluid injection devices can be installed at or near each corner of the rectangle. Advantageously, among the three gas injection devices 230 integrated and installed, the injection directions of two gas injection devices are perpendicular or substantially perpendicular to each other, and the injection direction of another one gas injection device 230 forms an angle of 45°or approximately 45° with the injection direction of each of the other said two gas injection devices 230, thereby providing forces in more directions.

Referring to FIG. 9, a winch unit 300 can also be installed on the load-bearing device 100. The winch unit 300 includes a winch body 310 and a rope 320, in which one end of the rope 320 is wound around the winch body 310, and the other end of the rope 320 is connected to a lifting and loading device (not shown), so that the lifting tool 10 can be suspended on the lifting and loading device (not shown). Although the number of the winch units and the number of corresponding ropes shown in FIG. 9 are four, the present application is not limited to this; rather, the number can be, for example, one, two, three, or other numbers. Advantageously, when there are at least two winch units 310, the winch bodies 310 are distributed at intervals along the circumference centered on the geometric center of the installation surface, which is advantageous for the uniform loads on the load-bearing device, and also makes the load-bearing device 100 be subjected to vertical pulling forces at multiple force bearing points, making it less likely for the load-bearing device 100 to rotate and tilt during the lifting process of the object. When there is one winch unit 310, it is preferably arranged at the geometric center of the installation surface of the load-bearing device to result in good suspension stability.

Advantageously, the winch unit 300 also includes a driving device 330, a transmission mechanism 340, and a rope guide mechanism 350. The driving device 330 can drive the winch body 310 to rotate, thereby enabling the winch body 310 to retract and deploy the rope 320 to achieve the lifting and lowering of the lifting tool. Advantageously, the driving device 330 is an electric motor. The transmission mechanism 340 can transmit the power output by the driving device 330 to the winch body 310. The transmission mechanism 340 can be a planetary gear mechanism or a bevel gear mechanism. The rope guide mechanism 350 can constrain and change the direction of the rope 320, so that the rope 320 can be retracted and deployed in an expected direction.

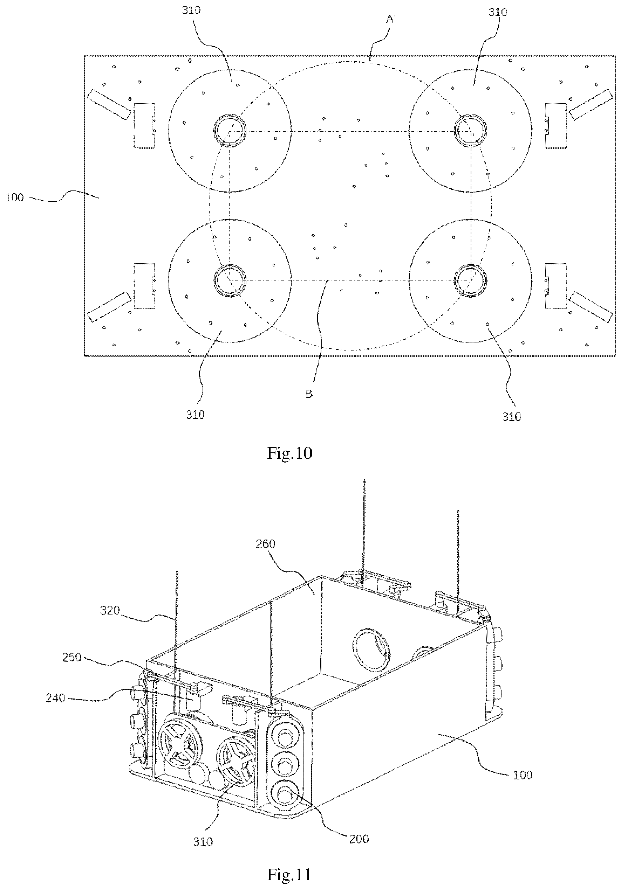

Referring to FIG. 10, advantageously, the number of the winch bodies 310 is four, and the four winch bodies 310 are distributed at intervals along the circumference A' centered on the geometric center of the installation surface, so that a distance from each winch body 310 to the geometric center of the installation surface is equal, which is advantageous for the stability and balance of the load-bearing device 100. Advantageously, the geometric centers of the winch bodies 310 form vertices of a rectangle B, making it easier for the load-bearing device 100 to resist external rotational torque and enhance the stability. The winch bodies 310 and the fluid power devices 200 can be distributed on the same circumference, or they are located on different circumferences.

The present application also provides another alternative solution of the lifting tool. Referring to FIG. 11, the lifting tool 10 includes a load-bearing device 100 and fluid power devices 200 installed on the load-bearing device 100. The load-bearing device 100 is a rectangular box with a top surface of the rectangular box being provided with an opening 260, and the load-bearing device 100 is suspended on a lifting and loading device (not shown) by ropes 320. It can be easily understood by those skilled in the art that when the load-bearing device 100 is a rectangular box, the lifted object can be placed into the rectangular box for lifting, so that the lifted object is not prone to falling during the lifting process and the safety is enhanced. Advantageously, at least one fluid power device 200 is installed on each side in a height direction of the rectangular box, and the fluid power devices 200 can be fixedly installed, or they are steerable. In a case where the fluid power devices 200 are steerable, motors 240 and transmission mechanisms 250 can also be installed on the load-bearing device 100. The motor 240 can provide steering power to the fluid power device 200, and the transmission mechanism 250 can transmit the power provided by the motor 240 to the fluid power device 200. The transmission mechanism 250 can be a connecting rod mechanism or a gear mechanism. Further advantageously, three or two fluid power devices 200 can be installed on each side in the height direction of the rectangular box, so that different magnitudes and directions of forces can be provided by controlling the number of the fluid power devices 200 in operation and/or the steering of each fluid power device 200.

When the load-bearing device 100 is a rectangular box, the number of the winch units 200 can be four; specifically, two winch bodies 310 are installed on each of two opposite side surfaces of the rectangular box respectively, thus ensuring that the ropes 320 are always in the vertical direction during lifting without the need to install rope guide mechanisms 350. Advantageously, the winch bodies 310 are arranged in such a way that their geometric centers can form vertices of a rectangle parallel to a bottom surface of the box, which is advantageous for the stability and balance of the load-bearing device 100.

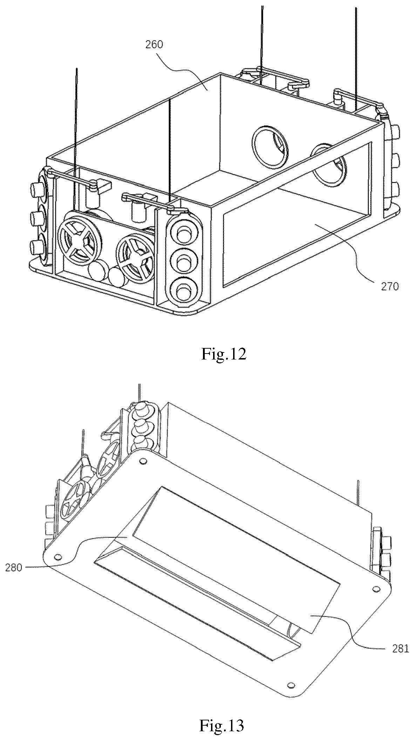

Additionally or preferably, an opening 270 may be provided on the side surface of the rectangular box, as shown in FIG. 12, so as to facilitate taking or placing objects out of/into the opening 270. In this case, a door may be optionally provided at the opening 270. Compared to the top opening 260, objects with a certain/substantial weight can be placed into or taken out of the side opening 270 manually or by means of tools, thus avoiding inconvenience when taking or placing the objects out of/into the top opening 260.

Additionally or alternatively, an opening 280 and a door 281 can be provided on the bottom surface of the rectangular box, as shown in FIG. 13. When placing the object, the door 281 is closed to provide a support force for the object. When it is necessary to take out the object, the door 281 can be opened to allow the object to fall or slide to a target position from a certain height.

Still referring to FIG. 9, the load-bearing device 100 can be provided with installation holes 290 for installing hooks or other components. The installation holes can be configured into different shapes according to the components required to be installed, such as a circular, elliptical, rectangular, triangular, or polygonal shape. The installation surface of the load-bearing device 100 can be provided with cut-outs (not shown) or the like, as long as they do not affect the load bearing or installation of the fluid power devices or other components. It can be easily understood by those skilled in the art that this is advantageous for reducing the weight of the lifting tool.

It can be easily understood by those skilled in the art that the lifting tool 10 according to the principle of the present application not only can resist the influence of wind on the lifting tool 10, keeping the lifting tool 10 stable, but also can adjust the position of the lifting tool 10 in a suspended/lifted state. During the process of lifting the lifting tool to a target position by the lifting and loading device, if the lifting tool 10 that carries the lifted object deviates during the horizontal movement toward the target position, the fluid power devices 200 can provide corresponding thrust to the lifting tool 10 to push it to a desired position. This is particularly suitable for situations where small adjustments to the position of the lifting tool 10 are required, thus avoiding the defect of complicated operation and excessive adjustment amplitude when moving the lifting and loading device to adjust the position of the lifting tool 10.

Advantageously, a cut-off actuator (not shown) can also be provided on the load-bearing device 100. When the lifting tool 10 is in an abnormal state, the cut-off actuator can cut off the ropes 320 as needed, thereby avoiding damage to the lifting tool caused by the abnormal state. The abnormal states include but are not limited to the winch unit 300 not being able to operate, the rope 320 being entangled on foreign objects, and the load-bearing device 100 not being retracted after exceeding a preset time when lowered, etc.

The lifting tool 10 of the present application can be applied to lifting and loading devices such as but not limited to an unmanned or manned aircraft, a bridge crane, a gantry crane, a stacking crane, a boom crane, a floating crane, or a mast crane, as can be understood by those skilled in the art. When in use, the lifting tool 10 is connected to the load-bearing device 100 through one end of the rope, and connected to the lifting and loading device through the other end of the rope.

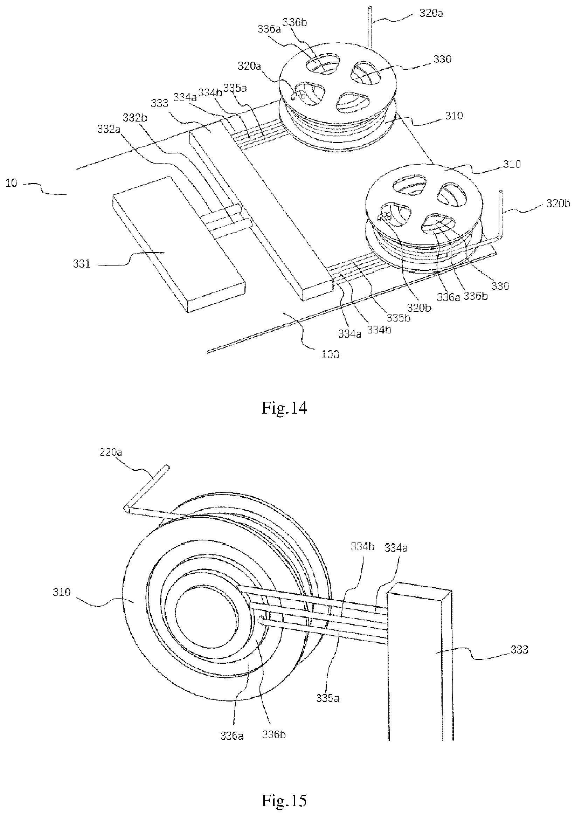

Referring to FIGS. 14 and 15, a power supply 331 can be installed on the load-bearing device 100 to provide power to the motor 330 or other devices in need such as the fluid power devices 200. Advantageously, a charging and discharging control device 333 can also be installed on the load-bearing device 100. Positive and negative poles of the power supply 331 are electrically connected to the charging and discharging control device 333 through wires 332a and 332b respectively, so that the charging and discharging control device 333 can control the charging voltage and the current of the power supply 331, as well as the minimum discharging voltage and the maximum current of the power supply 331, thus stabilizing the output voltage and the current. The charging and discharging control device 333 is electrically connected to the motor 330 through two wires 334a and 334b respectively. The wires 334a and 334b are electrically connected to the wires 332a and 332b inside the charging and discharging control device 333 respectively, thus forming a circuit for supplying power to the motor 330, so that the power supply 331 can supply power to the motor 330.

Advantageously, the rope 320 of the present application can be conductive to provide a charging function for the power supply 331 when needed. For example, the rope 320 can be a steel wire rope, or a nylon rope with attached conductive wires, etc. When needed, the power supply 331 on the load-bearing device can be charged using the conductive rope through an external power supply, such as an external power supply of the lifting and loading device. In another embodiment, for example, referring to FIGS. 13 and 14, the end of the rope 320a that is not wound around the winch body 310 is electrically connected to a positive pole of an external power supply (not shown), and the end of the rope 320b that is not wound around the winch body 310 is electrically connected to a negative pole of the external power supply. It can be easily understood by those skilled in the art that the ropes 320a and 320b can be electrically connected to the positive and negative poles of the external power supply respectively through another charging and discharging control device (not shown). Moreover, the inner rings of the winch bodies 310 are each installed with a collector slip ring 336. A rotor 336a of the collector slip ring 336 is connected to the inner ring of the winch body 310 and can rotate together with the winch body 310. The ends of the rope 320a and the rope 320b that are wound around the winch body 310 can be electrically connected to the corresponding rotors 336a respectively, so that when the winch body 310 rotates, the current can be transmitted to a stator 336b through the rotor 336a. The charging and discharging control device 333 is electrically connected to the stators 336b of two collector slip rings 336 through wires 335a and 335b respectively, and the wires 335a and 335b are electrically connected to the wires 332a and 332b respectively inside the charging and discharging control device 333, thus forming a charging circuit that connects the power supply 331 with the external power supply. This achieves charging of the power supply 331 through the rope 320, improves the utilization rate of the rope 320, and simplifies the structure of the lifting tool 10.

It can be easily understood by those skilled in the art that in this embodiment, the motor 330 can be provided on the inner ring of the stator of the collector slip ring 336, thereby saving an installation space; moreover, charging can be carried out when the lifting tool 10 is in a non-working state to avoid affecting normal operation. Alternatively, inside the charging and discharging control device 333, two wires 334a and 334b can be electrically connected to the wires 335a and 335b respectively, allowing the motor 330 to be directly electrically connected to the external power supply so that the motor 330 can be powered directly by the external power supply. Alternatively, in a case where the load-bearing device 100 is not provided with the winch bodies 310, the ropes 320a and 320b can be directly electrically connected to the charging and discharging control device 333, thereby charging the power supply 331 or supplying power to the fluid power devices 200 and other devices.

It can be easily understood by those skilled in the art that other electrical devices installed on the load-bearing device 100 such as the fluid power devices 200 can also be powered or charged through the above solution. For example, two wires can be used to electrically connect the fluid power devices 200 to the charging and discharging control device 333, and these two wires are electrically connected to the wires 332a and 332b inside the charging and discharging control device 333 respectively so as to supply power through the power supply 331, or they are electrically connected to the wires 335a and 335b respectively so as to supply power through the external power supply.

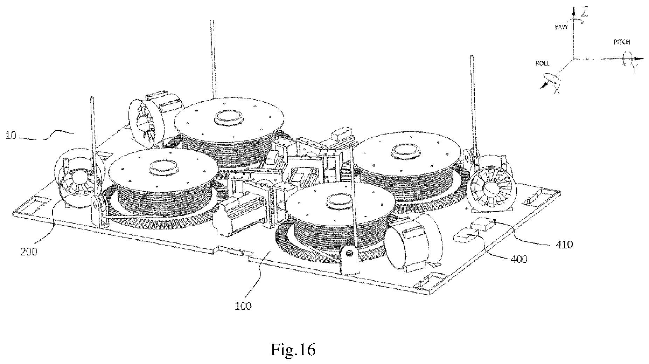

The present application also provides a system for adjusting the position of the lifting tool. The system for adjusting the position of the lifting tool may include a detection unit and a control unit. The detection unit can detect position information of the load-bearing device 100; the control unit can receive the position information, calculate deviation information between an actual position and an expected position, and control on/off of the fluid power devices 200 and/or adjust the magnitude of forces provided by the fluid power devices 200 based on the deviation information. Referring to FIG. 16, the detection unit can be a UWB (Ultra Wide Band) positioning device, which includes a positioning label (not shown) and a receiver 400. The positioning label can be installed on a target position on the ground, or on a lifted object to be lifted, and can instantly send target position information to the receiver 400, such as in the form of electromagnetic waves. The receiver 400 is installed on the lifting tool 10 and can obtain relative position information between the lifting tool 10 and the target position based on the target position information. When the relative position information changes or is not within an expected range, it indicates that the lifting tool 10 has deviated from the expected relative position; for example, due to the influence of wind or inaccurate operation during the movement, the lifting tool 10 has deviated from the expected relative position, that is, it has deviated from the expected position. Normally, the expected position of the lifting tool 10 can be any position directly above the target position. When the lifting tool 10 swings under the action of wind and is not directly above the target position, it deviates from the expected position. The receiver 400 can calculate the deviation information based on the relative position information between the lifting tool 10 and the target position, and transmit the position deviation information to the control unit. In the local coordinate system of the lifting tool 10, the deviation information includes the horizontal distance of the lifting tool 10 deviating from the target position on the X and Y axes, as well as the rotation angle of the lifting tool 10 on the YAW axis. After receiving the deviation information, the control unit converts the deviation information into expected values of the rotational speed or flow rate of the fluid power device 200 through control algorithms such as PID (proportional-integral-differential), ADRC (self-disturbance rejection control), LQR (linear quadratic regulator), or MPC (model predictive control), and controls the rotational speed or flow rate of the fluid power device 200 according to the expected values, thereby providing the lifting tool 10 with a force in the desired direction and of desired magnitude, and pushing it to the expected position. Preferably, before using the control algorithms to convert the deviation information, information data can be filtered out by using filtering algorithms such as Kalman filtering to remove noise data. In a case where the fluid power device is steerable, the control unit can also obtain an expected value of absolute angle of the rotor in the steering motor through motion solving algorithms based on the received deviation information, and control the rotation of the steering motor according to the expected value of absolute angle, so as to make the fluid power device 200 steer by an expected angle. The above control algorithms are known in the field of control, and will not be described in detail herein.

Alternatively, the detection unit can also be a GPS positioning device, in which position information of the target position is set in advance; the GPS positioning device can detect the actual position information of the lifting tool 10, thereby obtaining the deviation information between the target position and the actual position of the lifting tool 10, and transmitting the deviation information to the control unit. The control unit calculates the expected values of the rotational speed or flow rate of the fluid power device 200 and the expected value of absolute angle of the rotor in the steering motor through the control algorithms.

The control unit includes a controller 410 and an electronic speed controller (not shown). By adjusting the rotational speed of the duct or propeller, the electronic speed controller can adjust the magnitude of the force provided by the duct or propeller. Alternatively, when the fluid power device 200 is a gas injection device or a liquid injection device, the control unit may include a controller 410 and an electric flow regulation valve (not shown); by regulating the flow rate of the gas injection device or liquid injection device, the electric flow regulation valve can adjust the magnitude of the force provided by the gas injection device or liquid injection device. The controller 410 can receive the deviation information sent by the detection unit, obtain the expected values of the rotational speed or flow rate of the fluid power device 200 through its built-in algorithm, and control the electronic speed controller or electric flow regulation valve to achieve the corresponding expected values. In a case where the fluid power device is steerable, the controller can also obtain the expected value of absolute angle of the rotor in the steering motor, and control the electronic speed controller to achieve the expected value of absolute angle of the rotor in the steering motor. The controller 410 can be a MCU (Microcontroller Unit) and can be installed on the load-bearing device 100, or they can be installed separately. The electronic speed controller or electric flow regulation valve can be installed integrally with or separately from the fluid power device 200.

The present application also provides a method for adjusting the position of the lifting tool, which includes the following steps:
determining the position of the lifting tool and detecting information of deviation of the position of the lifting tool from the expected position; for example, the position of the lifting tool can be detected or determined through a detection unit or a positioning device, and the deviation information between the position of the lifting tool and the expected position can be detected through a detection unit such as a UWB positioning device; and
after receiving the detected deviation information of the lifting tool, using control algorithms such as PID, ADRC, LQR, or MPC for analysis to obtain the expected values of the rotational speed or flow rate of the fluid power device 200; then, based on the analysis results, controlling on/off of the fluid power device and/or adjusting the magnitude of the force provided by the fluid power device to provide the lifting tool with a force in the desired direction and of desired magnitude and push it to the expected position; for example, on/off of the fluid power device can be controlled and/or the magnitude of the force provided by the fluid power device can be adjusted by an electronic speed controller or an electric flow regulation valve to provide a corresponding force to the lifting tool to correct and overcome the aforementioned deviation.

Although at least one exemplary embodiment has been described in the foregoing detailed description, it should be understood that there are numerous variations. It should also be understood that one or more exemplary embodiments described herein are merely examples, and they are not intended to limit the scope, applicability, or construction of the present application in any way. On the contrary, the foregoing detailed description will provide convenient guidance for those skilled in the art to carry out one or more exemplary embodiments. It should be understood that various changes, variations, or alterations may be made to the functions and arrangement of the elements without departing from the scope of the present application as explained by the attached claims and equivalent solutions thereof.

## Claims

1. A lifting tool (10), comprising a load-bearing device (100) and fluid power devices (200) installed on the load-bearing device (100), in which the load-bearing device (100) is suspended on a lifting and loading device by ropes, and the fluid power devices (200) are installed on at least the same one installation surface of the load-bearing device (100).

2. The lifting tool (10) of claim 1, wherein the number of the fluid power devices (200) is four, and the fluid power devices (200) are distributed at intervals along a circumference (A) centered on a geometric center of the installation surface and can provide forces along a tangential direction of the circumference (A), in which the number of the fluid power devices that provide forces in a clockwise direction along the tangential direction and the number of the fluid power devices that provide forces in a counterclockwise direction along the tangential direction are both two, and these fluid power devices (200) are alternately distributed.

3. The lifting tool (10) of claim 2, wherein the fluid power devices (200) are arranged in such a way that geometric centers thereof form vertices of a rectangle.

4. The lifting tool (10) of claim 2, wherein the lifting tool (10) further includes four additional fluid power devices, which are correspondingly installed on the fluid power devices (200), and the forces provided by the additional fluid power devices during operation are in an opposite direction to the forces provided by the fluid power devices (200) on which the additional fluid power devices are installed during operation.

5. The lifting tool (10) of claim 1, wherein a steerable rudder (210) or air guide pipe is installed at a tail portion of the fluid power device.

6. The lifting tool (10) of any one of claims 1-5, wherein the load-bearing device (100) has two installation surfaces, and the fluid power devices (200) are installed to the two installation surfaces and located between the two installation surfaces.

7. The lifting tool (10) of claim 6, wherein a winch unit (300) is further installed on the installation surface; wherein the winch unit (300) includes a winch body (310), a rope (320), a driving device (330), a transmission mechanism (340), and a rope guide mechanism (350), one end of the rope (320) being wound around the winch body (310) and the other end of the rope (320) being connected to the lifting and loading device.

8. The lifting tool (10) of claim 7, wherein there are multiple winch units (300), and the winch bodies (310) of the winch units are distributed at intervals along a circumference (A') centered on the geometric center of the installation surface.

9. The lifting tool (10) of claim 7, wherein the number of the winch units (300) is four, and the winch bodies (310) of the winch units (300) are arranged in such a way that geometric centers thereof form vertices of a rectangle (B).

10. The lifting tool (10) of claim 6, wherein the fluid power device (200) is a gas injection device (230), and a gas storage device (231) is installed on the installation surface to provide gas for the gas injection device (230).

11. A lifting tool (10), which includes a load-bearing device (100) and fluid power devices (200) installed on the load-bearing device (100), in which the load-bearing device (100) is suspended on a lifting and loading device by ropes, wherein the load-bearing device (100) is a rectangular box, and at least one fluid power device (200) is installed on each side in a height direction of the rectangular box.

12. The lifting tool (10) of claim 11, wherein the rectangular box is provided with an opening (260; 270) on a top surface or side surface, or with a door (281) that can be opened and closed on a bottom surface.

13. The lifting tool (10) of claim 12, wherein the fluid power device (200) is a propeller, a duct, a gas injection device, or a liquid injection device.

14. A system for adjusting the position of the lifting tool (10) of any one of claims 1-13, wherein the system includes a detection unit and a control unit; and the detection unit is capable of detecting deviation information of deviation of the load-bearing device (100) from a target position, and the control unit is capable of receiving the deviation information and controlling on/off of the fluid power device (200) and/or adjusting a magnitude of the force provided by the fluid power device (200) based on the deviation information.

15. The system of claim 14, wherein the control unit includes a controller (410) and an electronic speed controller or electric flow regulation valve, and wherein the controller (410) commands the electronic speed controller or electric flow regulation valve to turn on or off the fluid power device (200) and/or adjust the magnitude of the force provided by the fluid power device (200) based on the received deviation information, and the electronic speed controller or the electric flow regulation valve controls on/off of the fluid power device (200) and/or adjust the magnitude of the force provided by the fluid power device (200) based on the command.
